# EUROPEAN PATENT APPLICATION

(11) **EP 4 606 524 A1**
(43) Date of publication of application: **27.08.2025**
(21) Application number: 25158673.1
(22) Date of filing: 18.02.2025
(51) Int. Cl.: B25C 1/00, B25C 5/16, F16B 15/08

(54) **STRIP OF FASTENERS AND FASTENING SYSTEM**

(30) Priority: 23.02.2024 AU 2024900441; 30.01.2025 AU 2025200634
(71) Applicant: Illinois Tool Works Inc., Glenview IL 60025 (US)
(72) Inventor: JOHNSTON, Peter, Glenview, 60025 (US); VINCENT, Benjamin Josef, Glenview, 60025 (US)
(74) Representative: HGF

(57) **Abstract**

A strip of fasteners for loading into a fastening tool, the strip of fasteners including a plurality of elongated fasteners arranged in a parallel side-by-side relationship, each of the elongated fasteners having a head for driving the fastener into a substrate, the strip being arranged such that the heads of the fasteners are located along one side of the strip, and wherein at least one fastener has a head with an indicator for indicating to an operator upon driving of said fastener that the strip is due for replacement.

## Description

### FIELD OF THE INVENTION

The invention relates generally to construction and, more particularly, but not exclusively, to fasteners for loading into a fastening tool.

### BACKGROUND OF THE INVENTION

It has been previously proposed to provide a strip of nails for loading into a fastening tool, for example in the form of a nailing gun. The nailing gun may be powered by a number of different means such as, for example, internal combustion of a charge provided from a replaceable can or canister.

However, the applicant has identified that there is a problem in that, with existing strips of nails, the strip of nails may be depleted at an inconvenient and/or dangerous time. For example, the strip of nails may run out while a carpenter using the nailing gun/tool is up a ladder or scrambling around on a roof. This is particularly inconvenient and time-consuming where the strip of nails is depleted without warning, as the carpenter may be required to descend from the roof to access a fresh strip of nails to be loaded into the fastening tool.

The applicant has identified that it would be advantageous to provide an improved strip of fasteners for loading into a fastening tool, which addresses one or more of the disadvantages of existing fastener systems.

Examples of the invention seek to provide an improved strip of fasteners and fastening system which obviates or at least alleviates one or more disadvantages of existing fastening systems, or which at least provides a useful alternative.

### SUMMARY OF THE INVENTION

In accordance with one aspect of the present invention, there is provided a strip of fasteners for loading into a fastening tool, the strip of fasteners including a plurality of elongated fasteners arranged in a parallel side-by-side relationship, each of the elongated fasteners having a head for driving the fastener into a substrate, the strip being arranged such that the heads of the fasteners are located along one side of the strip, and wherein at least one fastener has a head with an indicator for indicating to an operator upon driving of said fastener that the strip is due for replacement.

Preferably, a plurality of fasteners form a subgroup of fasteners of the strip, and each fastener of the subgroup has a head with an indicator for indicating to an operator upon driving of said fastener that the strip is due for replacement.

Preferably, the indicator is in the form of a visual indicator.

In a preferred form, a plurality of adjacent fasteners form said subgroup. More preferably, the subgroup comprises a plurality of fasteners prior to a final fastener of the strip. Even more preferably, the subgroup comprises a plurality of fasteners beginning at an 8th fastener counting inwardly from an end of the strip. More generally, the subgroup may comprise a plurality of fasteners terminating at a final fastener to be fired prior to a safety lockout being applied on the firing mechanism of the fastening tool. In one form, the subgroup comprises six fasteners, including and terminating at a final fastener to be fired prior to a safety lockout being applied on the firing mechanism of the fastening tool. It is envisaged that other fastening tools may have a safety lockout which activates at a range of different fasteners along a compatible strip of fasteners.

More preferably, the subgroup comprises a plurality of fasteners including the 8^{th} through to the 13^{th} fasteners counting inwardly from an end of the strip.

Preferably, the indicator is formed by painting each fastener head of the subgroup with a paint. More preferably, the indicator is formed by painting each fastener head of the subgroup with a paint of distinctive colour. Even more preferably, each of the painted heads is painted with a common colour such that the heads are painted alike.

In accordance with another aspect of the present invention, there is provided a method of forming a strip of fasteners as defined above, the method including a step of forming the fasteners into the strip and, subsequently, a step of painting the indicator onto the or each fastener head of the subgroup.

Preferably, the strip includes a holding means for holding the nails together in the strip formation. More preferably, the holding means includes one or more frangible strips of material adhered along a side of the strip of fasteners.

In accordance with yet another aspect of the present invention, there is provided a fastening system comprising a fastening tool in combination with a strip of fasteners as defined above.

### BRIEF DESCRIPTION OF THE DRAWINGS

The invention is further described by way of non-limiting example only, with reference to the accompanying drawings in which:
**Figure 1** is a side view of a strip of fasteners in accordance with an example of the present invention;
**Figure 2** is a perspective view of the strip of fasteners shown in Figure 1;
**Figure 3** shows fasteners from the strip of fasteners shown in Figure 1, subsequent to being driven into a substrate by a fastening tool;
**Figure 4** is a side view of a strip of fasteners in accordance with another example of the present invention;
**Figure 5** is a side view of the strip of fasteners shown in Figure 4; and
**Figure 6** is a perspective view of the strip of fasteners shown in Figure 4.

### DETAILED DESCRIPTION

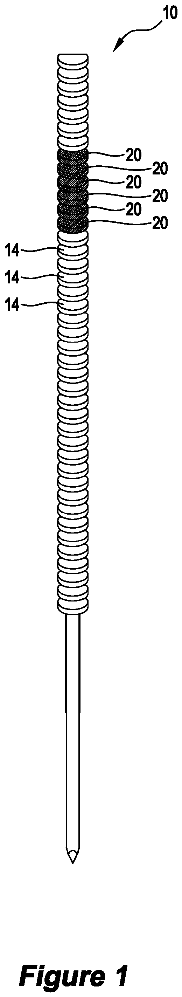

With reference to Figures 1 to 6, there are shown examples of a strip of fasteners 10 in accordance with the present invention. Advantageously, the strip of fasteners 10 has been developed by the applicant to provide a "low nail warning" to give advance notice to an operator of a fastening tool of an impending need to replace a strip of fasteners, in advance of the strip of fasteners actually being completely depleted. In doing so, this invention has the scope to avoid a common frustration with uses of a fastening tool, such as carpenters, of running out of nails in their fastening tool at the least opportune time - for example up a ladder or scrambling around a roof.

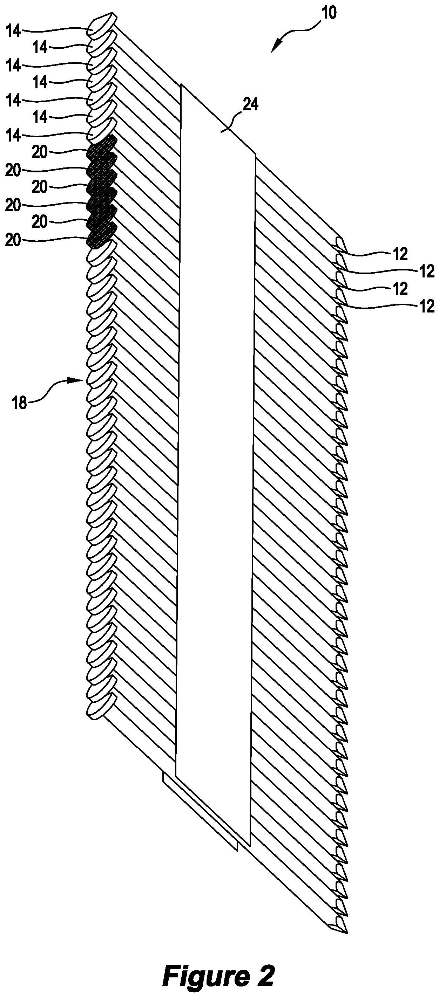

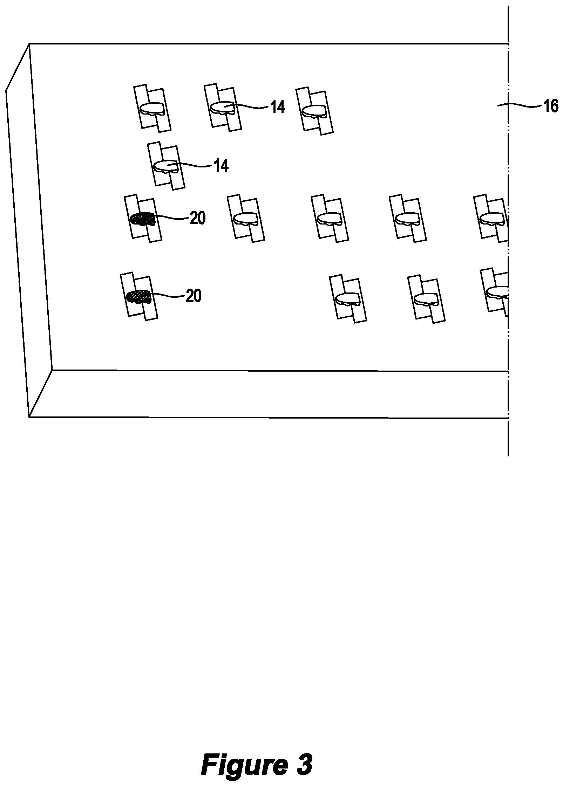

More specifically, as shown in Figure 1 and Figure 2 of the drawings, there is provided an example strip of fasteners 10 for loading into a fastening tool. The strip of fasteners 10 includes a plurality of elongated fasteners 12 arranged in a parallel side-by-side relationship (see Figure 2), each of the elongated fasteners 12 having a head 14 for driving the fastener 12 into a substrate 16. The strip 10 is arranged such that the heads 14 of the fasteners 12 are located along one side 18 of the strip 10. At least one fastener 12 has a head 14 with an indicator 20 for indicating to an operator upon driving of said fastener 12 that the strip 10 is due for replacement. For example, with reference to Figure 3, once the fasteners 12 are driven into the substrate 16 by the operator using the fastening tool, when the operator sees visually at least one indicator 20 on the head 14 of a fastener 12 driven into the substrate 16, the operator is made aware that the strip of fasteners is due for replacement. More specifically, in the preferred example of the present invention, there are six fasteners 12 having indicators 20 - accordingly, when the operator sees the first indicator 20 on the head 14 of a fastener 12 driven into the substrate 16, then the operator is notified that there are only five more fasteners 12 available to be driven prior to a safety lockout being activated on the fastening tool, rendering the fasting tool unusable until the strip of fasteners 10 is replaced.

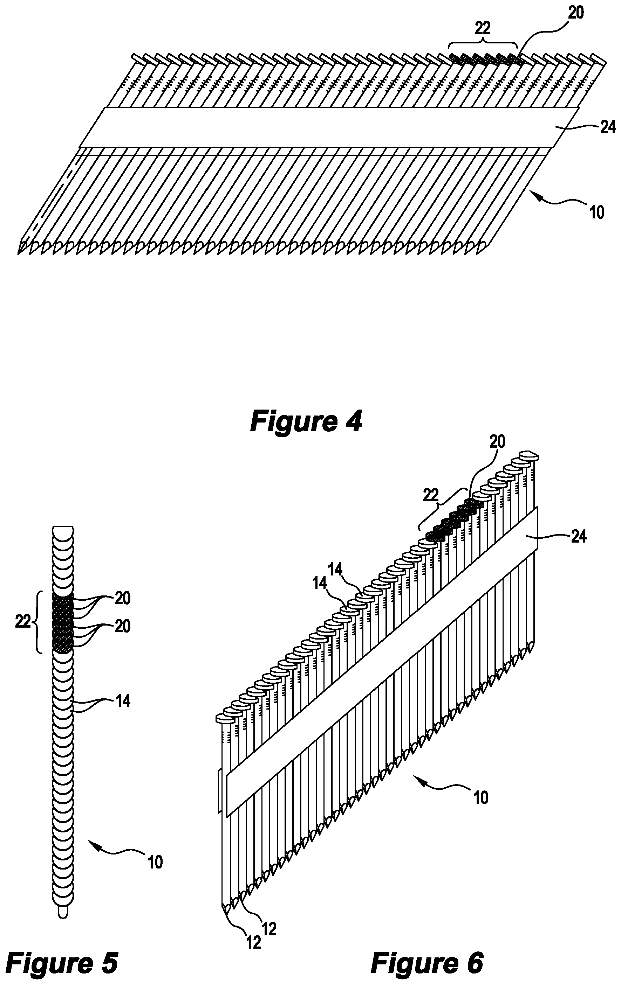

Figures 1 and 2 show a first example where the 5^{th} to 10^{th} fasteners 12 from a terminal end of the strip of fasteners 10 form a subgroup 22 of fasteners having indicators 20. Figures 4 to 6 show an alternative example in which the 8^{th} to 13^{th} fasteners 12 from a terminal end of the strip of fasteners 10 form a subgroup 22 of fasteners having indicators 20. The example shown in Figures 4 to 6 is specifically developed for a fastening tool which has a safety lockout activated after firing of the 8^{th} from last fastener.

Accordingly, each fastener 10 of the subgroup 22 has a head 14 with an indicator 20 for indicating to an operator upon driving of the fastener 12 that the strip 10 is due for replacement. In the examples shown in the drawings, the indicator 20 is in the form of a visual indicator.

In a preferred example shown in the drawings, there is a plurality of adjacent fasteners 12 (six fasteners to be precise) which form the subgroup 22. The subgroup 22 comprises a plurality of fasteners 12 prior to a final fastener of the strip 10. The number of fasteners between the subgroup 22 and the final fastener of the strip 10 will depend on the operation of the safety lockout mechanism of the compatible fasting tool. As mentioned above, in the example shown in Figures 4 to 6, the subgroup 22 comprises a plurality of fasteners 12 beginning at an 8th fastener counting inwardly from an end of the strip 10. The subgroup 22 includes a total of six fasteners 12, terminating at a final fastener (the 8^{th} fastener counting inwardly from an end of the strip 10) to be fired prior to a safety lockout being applied on the firing mechanism of the fastening tool.

As the subgroup 22 includes a total of six fasteners 12 beginning at an 8^{th} fastener counting inwardly from an end of the strip 10, the subgroup 22 comprises the plurality of fasteners including the 8^{th} through to the 13^{th} fasteners counting inwardly from the end of the strip 10. Each of the fasteners 12 in the subgroup 22 has a head 14 having an indicator 20.

Each indicator 20 is formed by painting each fastener head 14 of the subgroup 22 with a paint. As such, the indicator 20 is formed by painting each fastener head 14 of the subgroup 22 with a paint of distinctive colour, which in the example shown in the drawings is a red/orange colour. Each of the painted heads 14 is painted with a common colour such that the heads 14 are painted alike.

The strip of fasteners 10 may be formed by a method including one step of forming the fasteners 12 into the strip 10 and, subsequently, another step of painting the indicator 20 onto the or each fastener head 14 of the subgroup 22.

As can be seen in Figures 2, 4 and 6, the strip 10 includes a holding means 24 for holding the nails 12 together in the strip formation. The holding means 24 may include one or more frangible strips of material (for example, paper) adhered along a side of the strip of fasteners 10.

Accordingly, as will be appreciated from the above, the applicant has determined a significant improvement to address a common frustration with carpenters running out of nails in their tool right at the least opportune time - up a ladder, scrambling around a roof, etc. The applicant has previously considered other forms of indicators but these other forms have been found to be unappealing owing to cost and complexity. Advantageously, with the present invention, the applicant has determined that it would be beneficial to paint some specific heads on the nail strip a bright orange so that as the tools are fired the carpenter sees the colour and knows to replace the strip of nails. The nails to paint are quite specific - it would be the 8^{th} nail in the strip for perhaps 5 or 6 nails, so 8 through 13 from the end of the strip. The reason for the 8^{th} nail instead of the 1^{st} is that there is a "Last Nail Lock Out" feature in the tool that prevents the tool from firing when the magazine is empty (a safety precaution). When there are only 8 nails left in the tool a spring pin pops out and stops the tool firing. Therefore, even though there are 8 nails in the tool, it is considered "empty" as it will no longer fire until it has been reloaded with a fresh strip of fasteners. If these nails (the 7^{th} to last fasteners in the strip) were painted they would be fired after the tool has been reloaded with new nails (and the pin is pushed back in). Accordingly, the 7^{th} to last fasteners in the strip are a tail end quantity of fasteners of the strip which are unable to be fired without insertion of a new strip of fasteners. The subgroup comprises a plurality of fasteners prior to, and not including, a final fastener of the strip, with subsequent fasteners after the subgroup each being without an indicator. The subsequent fasteners after the subgroup correspond to the tail end quantity of fasteners of the strip.

While various embodiments of the present invention have been described above, it should be understood that they have been presented by way of example only, and not by way of limitation. It will be apparent to a person skilled in the relevant art that various changes in form and detail can be made therein without departing from the spirit and scope of the invention. Thus, the present invention should not be limited by any of the above described exemplary embodiments.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

The reference in this specification to any prior publication (or information derived from it), or to any matter which is known, is not, and should not be taken as an acknowledgment or admission or any form of suggestion that that prior publication (or information derived from it) or known matter forms part of the common general knowledge.

Certain embodiments of the invention are described in the following clauses:
Clause 1 : A strip of fasteners for loading into a fastening tool, the strip of fasteners including a plurality of elongated fasteners arranged in a parallel side-by-side relationship, each of the elongated fasteners having a head for driving the fastener into a substrate, the strip being arranged such that the heads of the fasteners are located along one side of the strip, and wherein at least one fastener has a head with an indicator for indicating to an operator upon driving of said fastener that the strip is due for replacement.
Clause 2 : A strip of fasteners as in clause 1, wherein a plurality of fasteners form a subgroup of fasteners of the strip, and wherein each fastener of the subgroup has a head with an indicator for indicating to an operator upon driving of said fastener that the strip is due for replacement.
Clause 3 : A strip of fasteners as in clause 1 or clause 2, wherein the indicator is in the form of a visual indicator.
Clause 4 : A strip of fasteners as in clause 2, wherein a plurality of adjacent fasteners form said subgroup.
Clause 5 : A strip of fasteners as in clause 4, wherein said subgroup comprises a plurality of fasteners prior to a final fastener of the strip.
Clause 6 : A strip of fasteners as in clause 5, wherein said subgroup comprises a plurality of fasteners beginning at an 8^{th} fastener counting inwardly from an end of the strip.
Clause 7 : A strip of fasteners as in clause 6, wherein said subgroup comprises a plurality of fasteners including the 8^{th} through to the 13^{th} fasteners counting inwardly from an end of the strip.
Clause 8 : A strip of fasteners as in clause 5, wherein said subgroup comprises a plurality of fasteners terminating at a final fastener to be fired prior to a safety lockout being applied on the firing mechanism of the fastening tool.
Clause 9 : A strip of fasteners as in clause 8, wherein said subgroup comprises six fasteners, including and terminating at a final fastener to be fired prior to a safety lockout being applied on the firing mechanism of the fastening tool.
Clause 10 : A strip of fasteners as in any one of clauses 1 to 9, wherein the indicator is formed by painting each fastener head of the subgroup with a paint.
Clause 11 : A strip of fasteners as in clause 10, wherein the indicator is formed by painting each fastener head of the subgroup with a paint of distinctive colour.
Clause 12 : A strip of fasteners as in clause 11, wherein each of the painted heads is painted with a common colour such that the heads are painted alike.
Clause 13 : A method of forming a strip of fasteners as in any one of clauses 1 to 12, the method including a step of forming the fasteners into the strip and, subsequently, a step of painting the indicator onto the or each fastener head of the subgroup.
Clause 14 : A strip of fasteners as in any one of clauses 1 to 12, wherein the strip includes a holding means for holding the nails together in the strip formation.
Clause 15 : A strip of fasteners as in clause 14, wherein the holding means include one or more frangible strips of material adhered along a side of the strip of fasteners.
Clause 16 : A fastening system comprising a fastening tool in combination with a strip of fasteners as defined in any one of clauses 1 to 12.
Clause 17 : A strip of fasteners as in clause 5, wherein said subgroup comprises a plurality of fasteners prior to a final fastener of the strip, with subsequent fasteners after the subgroup each being without an indicator.
Clause 18 : A strip of fasteners as in clause 17, wherein the subsequent fasteners optionally correspond to a tail end quantity of fasteners of the strip which are unable to be fired without insertion of a new strip of fasteners.

### List of numbered features

| | |
|---|---|
| Strip of fasteners | 10 |
| Elongated fasteners | 12 |
| Head | 14 |
| Substrate | 16 |
| One side (of the strip) | 18 |
| Indicator | 20 |
| Subgroup | 22 |
| Holding means | 24 |

## Claims

1. A strip of fasteners for loading into a fastening tool, the strip of fasteners including a plurality of elongated fasteners arranged in a parallel side-by-side relationship, each of the elongated fasteners having a head for driving the fastener into a substrate, the strip being arranged such that the heads of the fasteners are located along one side of the strip, and wherein at least one fastener has a head with an indicator for indicating to an operator upon driving of said fastener that the strip is due for replacement.

2. A strip of fasteners as claimed in claim 1, wherein a plurality of fasteners form a subgroup of fasteners of the strip, and wherein each fastener of the subgroup has a head with an indicator for indicating to an operator upon driving of said fastener that the strip is due for replacement.

3. A strip of fasteners as claimed in claim 1 or claim 2, wherein the indicator is in the form of a visual indicator.

4. A strip of fasteners as claimed in claim 2, wherein a plurality of adjacent fasteners form said subgroup.

5. A strip of fasteners as claimed in claim 4, wherein said subgroup comprises a plurality of fasteners prior to a final fastener of the strip.

6. A strip of fasteners as claimed in claim 5, wherein said subgroup comprises a plurality of fasteners beginning at an 8^{th} fastener counting inwardly from an end of the strip.

7. A strip of fasteners as claimed in claim 6, wherein said subgroup comprises a plurality of fasteners including the 8^{th} through to the 13^{th} fasteners counting inwardly from an end of the strip.

8. A strip of fasteners as claimed in claim 5, wherein said subgroup comprises a plurality of fasteners terminating at a final fastener to be fired prior to a safety lockout being applied on the firing mechanism of the fastening tool.

9. A strip of fasteners as claimed in claim 8, wherein said subgroup comprises six fasteners, including and terminating at a final fastener to be fired prior to a safety lockout being applied on the firing mechanism of the fastening tool.

10. A strip of fasteners as claimed in any one of claims 1 to 9, wherein the indicator is formed by painting each fastener head of the subgroup with a paint.

11. A strip of fasteners as claimed in claim 10, wherein the indicator is formed by painting each fastener head of the subgroup with a paint of distinctive colour, each of the painted heads being optionally painted with a common colour such that the heads are painted alike.

12. A method of forming a strip of fasteners as claimed in any one of claims 1 to 11, the method including a step of forming the fasteners into the strip and, subsequently, a step of painting the indicator onto the or each fastener head of the subgroup.

13. A strip of fasteners as claimed in any one of claims 1 to 11, wherein the strip includes a holding means for holding the nails together in the strip formation,
said holding means optionally including one or more frangible strips of material adhered along a side of the strip of fasteners.

14. A fastening system comprising a fastening tool in combination with a strip of fasteners as defined in any one of claims 1 to 11.

15. A strip of fasteners as claimed in claim 5, wherein said subgroup comprises a plurality of fasteners prior to a final fastener of the strip, with subsequent fasteners after the subgroup each being without an indicator, said subsequent fasteners optionally corresponding to a tail end quantity of fasteners of the strip which are unable to be fired without insertion of a new strip of fasteners.
